# EUROPEAN PATENT SPECIFICATION

(11) **EP 2 118 162 B1**
(45) Date of publication and mention of the grant of the patent: **25.10.2017**
(21) Application number: 08728838.7
(22) Date of filing: 01.02.2008
(51) Int. Cl.: C08G 18/10, C08G 18/12, C08G 18/40, C08G 18/48, C08G 18/70, C09J 175/04, C08G 18/76, C08G 18/79, C08K 5/00, C08K 5/42, C08K 5/435, C08K 5/521

(54) **ADHESIVE USEFUL FOR INSTALLING VEHICLE WINDOWS**
HAFTMITTEL ZUM EINBAU VON FAHRZEUGFENSTERN
ADHÉSIF UTILE POUR L'INSTALLATION DE FENÊTRES DE VÉHICULE

(30) Priority: 02.02.2007 US 899284 P
(43) Date of publication of application: 18.11.2009
(73) Proprietor: Dow Global Technologies LLC, Midland, MI 48674 (US)
(72) Inventor: WU, Ziyan, Wayland, Massachusetts 01778 (US); ZHOU, Lirong, Rochester Hills, MI 43306 (US); HEBERER, Daniel, Rochester Hills, MI 48309 (US)
(74) Representative: Beck Greener
(86) International application number: PCT/US2008/052813
(87) International publication number: WO 2008/097852

(56) References cited:
- EP-A- 0 489 611
- WO-A-02/12365
- US-A- 4 539 345
- US-A- 4 625 012
- US-A1- 2005 054 764

## Description

### Background of Invention

Adhesive compositions are used to affix (bond) glass (windows) into buildings and vehicles, see Rizk, U.S. 4,780,520; Bhat, U.S. 5,976,305; Hsieh et al, U.S. 6,015,475 and Zhou, U.S. Patent 6,709,539. In automobile factories windows are installed using robots and computer controlled processing which facilitates the use of a variety of high performance adhesives, for instance nonconductive adhesives and high modulus adhesives. The speed of cure is not a significant issue because new vehicles are not driven a significant distance for several days after window installation. Conversely, when a vehicle needs a window replaced, it is often performed in a remote location by an installer working from a vehicle. In this environment, speed of cure is important as the vehicle owner desires to drive the vehicle as soon as possible after installation on the window. Adhesives useful in replacing windows for vehicles which facilitate fast drive away times are known see Bhat, U.S. 5,976,305 and Zhou, U.S. Patent 6,709,539. The introduction of various high performance adhesive compositions used for installing windows in automobile factories presents a problem for replacement window installers. First, adhesives that meet all the varied performance requirements are not available in the market place. Second, it is difficult to formulate many high performance adhesive compositions to allow rapid drive away times and that does not sag or string. Sag is the loss of the shape of the adhesive bead, often as the result of gravitational forces. If severe enough, this deformation can interfere in the proper installation and sealing of the window into the vehicle. Stringing of an adhesive is the formation of a long string of adhesive at the end of the bead of adhesive dispensed which can complicate application of the adhesive and cause imperfections in the installed adhesive bead. Thus, a replacement window installer often has to carry a variety of adhesives so that the installer can match the adhesive to the properties of the original adhesive.

Adhesives have been developed which provide good initial green strength that allows the adhesive to hold the glass in place without additional fixturing to hold the glass in place. This is achieved through the inclusion of crystalline polyesters in the adhesive. These adhesives have hot melt properties that require that the adhesive be melted and applied hot; see Proebster, U.S. 5,747,581. The problem with these adhesives is that they require heat and the use of complex equipment for their use. The initial green strength provided is not sufficient for rapid drive away time. Because of the proliferation of hot melt adhesives in the automobile window replacement market, many installers insist on heating adhesives prior to applying the adhesive to the window or the window flange. Many adhesives when heated demonstrate sagging and or stringing.

Several approaches to providing non-conductive adhesives including using non-conductive carbon black and polyester polyols in adhesive formulations are known, see commonly assigned Patent U.S. 7,101,950 titled COMPOSITION USEFUL AS AN ADHESIVE FOR INSTALLING VEHICLE WINDOWS. WO 02/053671 discloses the use of low or non-oxidized carbon black with polycarbonate based polyols to achieve this objective. The problem with this technology is that low conductive carbon black and polycarbonate polyols are significantly more expensive than standard grades of carbon black which are conductive. Commonly assigned patent application Zhou Patent Publication Number US2006/0096694A1, titled HIGH MODULUS, NONCONDUCTIVE ADHESIVE USEFUL FOR INSTALLING VEHICLE WINDOWS discloses an adhesive which achieves a variety of high performance properties which contains polyester polyols and standard carbon black. The nonconductive properties are imparted by carefully limiting the amount of carbon black. The amount of carbon black impacts the rheological properties of the adhesive and thus the sag and stringiness of the adhesive.

What is needed is a composition which is useful as an adhesive for bonding glass into a structure which may be formulated to exhibit a variety of high performance properties (such as high modulus and nonconductive nature), exhibits fast safe drive away times when applied under a variety of conditions, fast strength development, can be applied without the need for heating the adhesive, can be applied under a wide range of environmental conditions, does not require expensive ingredients and does not sag or string when applied.

### Summary of Invention

In one embodiment, the invention is a composition comprising: a) one or more isocyanate functional polyether based prepolymers; b) one or more low polar plasticizers; c) one or more high polar plasticizers d) one or more carbon black compositions; and e) one or more catalysts for the reaction of isocyanate moieties with hydroxyl groups. In one preferred embodiment the one or more isocyanate functional polyether based prepolymers contain one or more organic based polymers dispersed therein. In a preferred embodiment, the one or more conductive carbon black compositions are present in an amount such that the composition has a dielectric constant of about 15 or less.

In another embodiment the invention is a method of bonding two or more substrates together which comprises contacting the two or more substrates together with a composition according to this invention disposed along at least a portion of the area wherein the substrates are in contact.

In yet another embodiment the invention is a method of replacing a window of a vehicle comprising: i) removing the window from the vehicle; ii) applying a composition according to the invention to a replacement window or to the flange of the vehicle adapted to hold the window into the vehicle; iii) contacting the flange of the vehicle and the replacement window with the composition disclosed between the replacement window and the flange of the vehicle; and iv) allowing the adhesive to cure.

The composition of the invention is useful as an adhesive to bond substrates together. A variety of substrates may be bonded together using the composition, for instance, plastics, glass, wood, ceramics, metal, coated substrates, such as plastics with an abrasion resistant coating disposed thereon, and the like. The compositions of the invention may be used to bond similar and dissimilar substrates together. The compositions are especially useful for bonding glass or a plastic with an abrasion resistant coating disposed thereon to other substrates such as vehicles and buildings. The compositions of the invention are also useful in bonding parts of modular components together, such as vehicle modular components. The glass or plastic with an abrasion resistant coating disposed thereon can be bonded to coated and uncoated portions of vehicles. Advantageously the adhesive is pumpable, sag and string resistant and functional, bonds parts together, at temperatures between about 20°C and about 80°C. Preferably, the composition exhibits a sag of an uncured sample of less than about 2 mm. This allows the adhesives prepared from the composition of the invention to be applied at a wide range of ambient temperatures. Heated application machinery is not necessary for the application of the adhesive. Furthermore, the adhesive demonstrates rapid strength development which facilitates rapid drive away times of preferably one hour, and more preferably 30 minutes, after application of the adhesive at temperatures of from about 0 °F(-18°C) to about 115°F (46°C). In particular, windshields installed under such conditions meet United States Federal Motor Vehicle Safety Standard (FMVSS) 212. In some preferred embodiments the compositions of the invention are nonconductive and demonstrate a dielectric constant of about 15 or less. The compositions of the invention preferably demonstrate a modulus after application for two weeks of about 2 MPa or greater, more preferably about 2.2 MPa or greater and preferably about 3 MPa or less according to ASTM D4065 measured at 25°C. The compositions of the invention exhibit a storage modulus, G', of about 5.3 x 10⁵ Pa or greater, preferably about .53 MPa or greater and most preferably about 1.0 MPa or greater. Pumpability of the composition can be measured according to the press flow viscosity test described hereinafter; according to this test the composition exhibits a press flow viscosity of about 20 to about 50 seconds, most preferably 20 to about 40 seconds.

### Detailed Description of Invention

One or more as used herein means that at least one, or more than one, of the recited components may be used as disclosed. Nominal as used with respect to functionality means the theoretical functionality, generally this can be calculated from the stoichiometry of the ingredients used. Generally, the actual functionality is different due to imperfections in raw material, incomplete conversion of the reactants and formation of bi-products.

The one or more isocyanate functional polyether based prepolymers are present in sufficient quantity to provide adhesive character to the composition. Such prepolymers have an average isocyanate functionality sufficient to allow the preparation of a crosslinked polyurethane upon cure and not so high that the polymers are unstable. Stability in this context means that the prepolymer or adhesive prepared from the prepolymer has a shelf life of at least 6 months at ambient temperatures, in that it does not demonstrate an increase in viscosity during such period which prevents its application or use. Preferably, the prepolymer or adhesive prepared therefrom does not undergo an increase in viscosity of more than about 50 percent during the stated period. The prepolymer preferably has a free isocyanate content which facilitates acceptable strength in adhesives prepared from the prepolymers after 60 minutes and stability of the prepolymer. Preferably, the free isocyanate content is about 0.8 percent by weight or greater based on the weight of the prepolymer and more preferably about 0.9 percent by weight or greater, and preferably about 2.2 percent by weight or less, more preferably about 2.0 or less, even more preferably about 1.4 percent by weight or less and even more preferably about 1.1 percent by weight or less and most preferably about 1.0 percent by weight or less. Above about 2.2 percent by weight the adhesives prepared from the prepolymer may demonstrate lap shear strengths after 60 minutes which are too low for the intended use. Below about 0.8 percent by weight the prepolymer viscosity is too high to handle and the working time is too short.

The prepolymer preferably exhibits a viscosity, which facilitates formulation of a pumpable adhesive which has good green strength. Preferably, the viscosity of the prepolymer is about 100,000 centipoise (100 Pa s) or less and more preferably about 70,000 centipoise (70 Pa s)) or less, and most preferably about 45,000 centipoise (45Pa s) or less and about 30,000 centipoise (30Pa s) or greater. The viscosity used herein is Brookfield viscosity determined using a number 5 spindle. The viscosity of the adhesive can be adjusted with fillers, although the fillers generally do not improve the green strength of the final adhesive. Below about 30,000 centipoise (30 Pa s) the adhesive prepared from the prepolymer may exhibit poor green strength. Above about 100,000 (100Pa s) the prepolymer may be unstable and hard to dispense.

Preferable polyisocyanates for use in preparing the prepolymer include those disclosed in U.S. Patent 5,922,809 at column 3, line 32 to column 4, line 24. Preferably, the polyisocyanate is an aromatic or cycloaliphatic polyisocyanate such as diphenylmethane-4,4'-diisocyanate, isophorone diisocyanate, tetramethylxylene diisocyanate, and is most preferably diphenylmethane-4,4'-diisocyanate. The diols and triols are generically referred to as polyols. Polyols useful in this invention are diols and triols corresponding to the polyols described in U.S. Patent 5,922,809 at column 4, line 60 to column 5, line 50, incorporated herein by reference. Preferably, the polyols (diols and triols) are polyether polyols and more preferably polyoxyalkylene oxide polyols. The most preferred triols are ethylene oxide-capped polyols prepared by reacting glycerin with propylene oxide, followed by reacting the product with ethylene oxide. Preferably, the polyether is chosen to decrease the polarity of the prepolymer. A significant factor in determining the polarity of the prepolymer is the amount of ethylene oxide units in the polyether used to prepare the prepolymer. Preferably, the ethylene oxide content in the prepolymer is about 3 percent by weight or less, more preferably about 1.2 percent by weight or less and most preferably about 0.8 percent by weight or less. As used herein polarity refers to the impact of the presence of polar groups in the backbone of the prepolymer.

In one preferred embodiment the prepolymer contains one or more organic based polymers dispersed therein. Preferably, the organic based polymer is included in the prepolymer by inclusion of a dispersion triol having dispersed therein particles of an organic based polymer. The preferable dispersion triols are disclosed in Zhou, U.S. Patent 6,709,539 at column 4, line 13 to column 6, line 18. Preferably, the triol used to disperse the organic particles is a polyether triol and more preferably a polyoxyalkylene based triol. Preferably, such polyoxyalkylene oxide triol comprises a polyoxypropylene chain with a polyoxyethylene end cap. Preferably, the triols used have a molecular weight of about 4,000 or greater, more preferably about 5,000 or greater and most preferably about 6,000 or greater. Preferably, such triol has molecular weight of about 8,000 or less and more preferably about 7,000 or less.

Preferably, the particles dispersed in the dispersion triol comprise a thermoplastic polymer, rubber-modified thermoplastic polymer or a polyurea dispersed in a triol. The polyurea preferably comprises the reaction product of a polyamine and a polyisocyanate. Preferable thermoplastic polymers are those based on monovinylidene aromatic monomers and copolymers of monovinylidene aromatic monomers with conjugated dienes, acrylates, methacrylates, unsaturated nitriles or mixtures thereof. The copolymers can be block or random copolymers. More preferably the particles dispersed in the triol comprise copolymers of unsaturated nitriles, conjugated dienes and a monovinylidene aromatic monomer, a copolymer of an unsaturated nitrile and a monovinylidene aromatic monomer or a polyurea. Even more preferably the particles comprise a polyurea or polystyrene-acrylonitrile copolymer with the polystyrene-acrylonitrile copolymers being most preferred. The organic polymer particles dispersed in the triol preferably have a particle size which is large enough to improve the impact properties and elastomeric properties of the finally cured adhesive, but not so large so as to reduce the ultimate strength of the adhesive after cure. The particles may be dispersed in the triol or grafted to the backbone of some of the triols. Preferably, the particle size is about 10 microns or greater and more preferably the particle size is about 20 microns or greater. Preferably, the particle size is about 50 microns or less and more preferably the particle size is about 40 microns or less. The triol dispersion contains a sufficient amount of organic polymer particles such that the adhesive upon cure has sufficient hardness for the desired use and not so much such that the cured adhesive has too much elasticity as defined by elongation. Preferably, the dispersion contains about 20 percent by weight or greater of organic polymer particles copolymer based on the dispersion, preferably about 30 percent by weight or greater and more preferably about 35 percent by weight or greater. Preferably, the dispersion contains about 60 percent by weight or less of organic polymer particles based on the dispersion, preferably about 50 percent by weight or less and more preferably about 45 percent by weight or less.

The polyols are present in an amount sufficient to react with most of the isocyanate groups of the isocyanates leaving enough isocyanate groups to correspond with the desired free isocyanate content of the prepolymer. Preferably, the polyols are present in an amount of about 30 percent by weight or greater based on the prepolymer, more preferably about 40 percent by weight or greater and most preferably about 55 percent by weight or greater. Preferably, the polyols are present in an amount of about 75 percent by weight or less based on the prepolymer, more preferably about 65 percent by weight or less and most preferably about 60 percent by weight or less.

The weight ratio of diols to triols and dispersion triols is important to achieving the desired cure rate and strength of the adhesive. If the weight ratio is too low the formulation is too viscous to handle and the resulting adhesive has insufficient elasticity to retain glass in an automobile window frame under crash conditions. If the ratio is too high the adhesive does not have adequate green strength. The weight ratio of diol to triol and dispersion triol is preferably about 0.8 or greater and more preferably about 0.85 or greater and most preferably about 0.9 or greater. The weight ratio of diol to triol and dispersion triol is preferably about 1.2 or less; more preferably about 1.0 or less and most preferably about 0.95 or less. In the embodiment where the polyols comprise a mixture of diols and triols, the amount of diols present is preferably about 15 percent by weight or greater based on the prepolymer, more preferably about 25 percent by weight or greater and most preferably about 28 percent by weight or greater; and about 40 percent by weight or less based on the prepolymer, more preferably about 35 percent by weight or less and most preferably about 30 percent by weight or less. In the embodiment where the polyols comprise a mixture of diols and triols, the amount of triols (non dispersion triol and dispersion triol) present is preferably about 15 percent by weight or greater based on the prepolymer, more preferably about 25 percent by weight or greater and most preferably about 28 percent by weight or greater; and preferably about 45 percent by weight or less based on the prepolymer, more preferably about 35 percent by weight or less and most preferably about 32 percent by weight or less.

The dispersion of organic polymer particles in a triol may be present in the prepolymer in an amount of about 10 percent by weight or greater of the prepolymer and more preferably about 12 percent by weight or greater, and about 18 percent by weight or less of the prepolymer and more preferably about 15 percent by weight or less.

The polyurethane prepolymers useful in the invention may further comprise a plasticizer. The plasticizers useful in the prepolymer are common plasticizers useful in polyurethane adhesive applications and well known to those skilled in the art and are referred hereinafter as low polar plasticizers. The plasticizer is present in an amount sufficient to disperse the prepolymer in the final adhesive composition. The plasticizer can be added to the adhesive either during preparation of the prepolymer or during compounding of the adhesive composition. Preferably, the plasticizer is present in about 1 percent by weight or greater of the prepolymer formulation (prepolymer plus plasticizer), more preferably about 20 percent by weight or greater and most preferably about 30 percent by weight or greater. Preferably, the plasticizer is present in about 45 percent by weight or less of the prepolymer formulation and more preferably about 35 percent by weight or less.

In order to improve the rheology of the formulated adhesive it is desirable to regulate the polarity of the isocyanate functional polyether based prepolymer. This is achieved by adjusting the amount of ethylene oxide units in the prepolymer as described hereinbefore. The polarity can also be adjusted by adjusting the density of urea, urethane or related units in the polymer. If the amount is too high the polymer is too polar and it becomes difficult to formulate an adhesive with the proper rheology. Preferably, the amount of urea, urethane and related units in the polymer is about 8.5 percent by weight or less, more preferably about 7 percent by weight or less and most preferably about 4.5 percent by weight or less. Related units refer herein to other functional groups located in the backbone of the prepolymer which contain at least one carbonyl group and at least one of a nitrogen or oxygen atom, for example, biuret and uretdione moieties.

The prepolymer may be prepared by any suitable method, such as by reacting polyols, such as diols, triols and optionally dispersion triols such as a copolymer polyol or grafted triol, with an excess over stoichiometry of one or more polyisocyanates under reaction conditions sufficient to form a prepolymer having isocyanate functionality and free isocyanate content which meets the criteria discussed above. In a preferable method used to prepare the prepolymer, the polyisocyanates are reacted with one or more diols, one or more triols and, optionally, one or more dispersion triols. Preferable processes for the preparation of the prepolymers are disclosed in U.S. Patent 5,922,809 at column 9, lines 4 to 51 incorporated herein by reference. The polyurethane prepolymers are present in the adhesive composition in an amount sufficient such that when the resulting adhesive cures substrates are bound together. Preferably, the polyurethane prepolymers are present in an amount of about 20 parts by weight of the adhesive composition or greater, more preferably about 30 parts by weight or greater and most preferably about 35 parts by weight or greater. Preferably, the polyurethane prepolymers are present in an amount of about 60 parts by weight of the adhesive composition or less, more preferably about 50 parts by weight or less and even more preferably about 45 parts by weight or less.

The composition may further comprise one or more isocyanate functional prepolymers containing one or more polyester based polyols which are solid at ambient temperature, about 23°C. The polyester based polyols have melting points such that the prepolymer provides sufficient green strength to prevent the substrates from moving in relation to one another due to gravitational forces at ambient temperatures. In terms of installing a window in a vehicle or building, the polyester based prepolymer prevents the window from sliding after installation. Preferably, the polyester polyols have melting points of about 40°C or greater, even more preferably about 45°C or greater and most preferably about 50°C or greater. Preferably, the polyester polyols exhibit melting points of about 85°C or less, even more preferably about 70°C or less and most preferably about 60°C or less. The polyester based isocyanate prepolymer can be prepared using one or more polyester polyols. The amount of polyester polyol in the prepolymer is a sufficient amount to provide the needed green strength to the composition of the invention and to render it solid at ambient temperatures. Preferably, the polyester polyol is present in the polyester polyol based isocyanate prepolymer in an amount of about 70 percent by weight or greater based on the weight of the prepolymer and more preferably about 80 percent by weight or greater. Preferably, the polyester polyol is present in the polyester polyol based isocyanate prepolymer in an amount of about 95 percent by weight or less based on the weight of the prepolymer and more preferably about 90 percent by weight or less. Preferably, the polyester polyol based isocyanate prepolymer is present in the adhesive composition in sufficient amount to give the needed green strength and the desired rheology of the composition. Preferably, the polyester polyol based isocyanate prepolymer is present in the adhesive composition in an amount of about 0 parts by weight or greater based on the weight of the adhesive composition, more preferably about 1 parts by weight or greater and most preferably about 2 parts by weight or greater. Preferably, the polyester polyol based isocyanate prepolymer is present in the adhesive composition in an amount of about 10 parts by weight or less, even more preferably about 5 parts by weight or less and most preferably about 2.5 parts by weight or less. The polyester polyol can be any polyester composition that meets the property requirements defined, which is crystalline at ambient temperatures and melts in the desired temperature range. Preferred polyester polyols are prepared from linear diacids and linear diols. A more preferred diacid is adipic acid. More preferred diols are the C₂₋₆ diols, with butane diols, pentane diols and hexane diols being most preferred. The polyester based polyisocyanate prepolymers can be prepared using the processes and isocyanates described hereinbefore. Preferred polyester polyols are available from Creanova under the trade name Dynacol and the designations 7360 and 7330, with 7360 more preferred.

The composition of the invention may further comprise a polyfunctional isocyanate for the purpose of improving the modulus of the composition in the cured form. Polyfunctional as used in the context of the isocyanates refers to isocyanates having a functionality of 3 or greater. The polyisocyanates can be any monomeric, oligomeric or polymeric isocyanate having a nominal functionality of about 3 or greater. More preferably the polyfunctional isocyanate has a nominal functionality of about 3.2 or greater. Preferably, the polyfunctional isocyanate has a nominal functionality of about 5 or less, even more preferably about 4.5 or less and most preferably about 4.2 or less. The polyfunctional isocyanate can be any isocyanate which is reactive with the isocyanate polyisocyanate prepolymers used in the composition and which improves the modulus of the cured composition. The polyisocyanates can be monomeric; trimeric isocyanurates or biurets of monomeric isocyanates; oligomeric or polymeric, the reaction product of several units of one or more monomeric isocyanates. Examples of preferred polyfunctional isocyanates include trimers of hexamethylene diisocyanate, such as those available from Bayer under the trademark and designation Desmodur® N3300, and polymeric isocyanates such as polymeric MDI (methylene diphenyl diisocyanates) such as those marketed by The Dow Chemical Company under the trademark of PAPI™, including PAPI™ 20 polymeric isocyanate. The polyfunctional isocyanates are present in sufficient amount to impact the modulus of the cured compositions of the invention. If too much is used the cure rate of the composition is unacceptably slowed down. If too little is used the desired modulus levels are not achievable. The polyfunctional isocyanate is preferably present in an amount of about 0.5 parts by weight or greater based on the weight of the adhesive composition, more preferably about 1.0 parts by weight or greater and most preferably about 1.4 parts by weight or greater. The polyfunctional isocyanate is preferably present in an amount of about 8 parts by weight or less, based on the weight of the adhesive composition, more preferably about 5 parts by weight or less and most preferably about 2 parts by weight or less.

The composition of the invention also comprises carbon black to give the composition the desired black color, viscosity and sag resistance. One or more carbon black compositions may be used in the adhesive composition. The carbon black used in this invention may be a standard carbon black which is not specially treated to render it nonconductive. Standard carbon black is carbon black which is not specifically surface treated or oxidized. Alternatively one or more nonconductive carbon blacks may be used exclusively or in conjunction with the standard carbon black. The amount of carbon black in the composition is that amount which provides the desired color, viscosity, sag resistance and where nonconductivity is important in an amount such that the composition is nonconductive to the level defined herein. The standard carbon black is preferably used in the amount of about 10 parts by weight or greater based on the weight of the composition, more preferably about 12 parts by weight or greater and most preferably about 14 parts by weight or greater. The standard carbon black is preferably present in an amount of about 20 parts by weight or less based on the weight of the composition, more preferably about 18 parts by weight or less and most preferably about 16 parts by weight or less. The total carbon black present including conductive or standard and non-conductive carbon black is preferably about 35 parts by weight or less based on the weight of the composition, more preferably about 30 parts by weight or less and most preferably about 20 parts by weight or less. Standard carbon blacks are well known in the art and include RAVEN™ 790, RAVEN™ 450, RAVEN™ 500, RAVEN™ 430, RAVEN™ 420 and RAVEN™ 410 carbon blacks available from Colombian and CSX™ carbon blacks available from Cabot, and PRINTEX™30 carbon black available from Degussa. Nonconductive carbon blacks are well known in the art and include RAVEN™ 1040 and RAVEN™ 1060 carbon black available from Colombian.

The adhesive also contains a catalyst which catalyzes the reaction of isocyanate moieties with water or an active hydrogen containing compound. Such compounds are well known in the art. The catalyst can be any catalyst known to the skilled artisan for the reaction of isocyanate moieties with water or active hydrogen containing compounds. Among preferred catalysts are organotin compounds, metal alkanoates, and tertiary amines. Mixtures of classes of catalysts may be used. A mixture of a tertiary amine and a metal salt is preferred. Even more preferred are tertiary amines, such as dimorpholino diethyl ether, and a metal alkanoate, such as bismuth octoate. Included in the useful catalysts are organotin compounds such as alkyl tin oxides, stannous alkanoates, dialkyl tin carboxylates and tin mercaptides. Stannous alkanoates include stannous octoate. Alkyl tin oxides include dialkyl tin oxides, such as dibutyl tin oxide and its derivatives. The organotin catalyst is preferably a dialkyltin dicarboxylate or a dialkyltin dimercaptide. Dialkyl tin dicarboxylates with lower total carbon atoms are preferred as they are more active catalysts in the compositions of the invention. The preferred dialkyl dicarboxylates include 1,1-dimethyltin dilaurate, 1,1-dibutyltin diacetate and 1,1-dimethyl dimaleate. Preferred metal alkanoates include bismuth octoate or bismuth neodecanoate. The organo tin or metal alkanoate catalyst is present in an amount of about 60 parts per million or greater based on the weight of the adhesive, more preferably 120 parts by million or greater. The organo tin catalyst is present in an amount of about 1.0 percent or less based on the weight of the adhesive, more preferably 0.5 percent by weight or less and most preferably 0.1 percent by weight or less.

Useful tertiary amine catalysts include dimorpholinodialkyl ether, a di((dialkylmorpholino)alkyl) ether, bis-(2-dimethylaminoethyl)ether, triethylene diamine, pentamethyldiethylene triamine, N,N-dimethylcyclohexylamine, N,N-dimethyl piperazine 4-methoxyethyl morpholine, N-methylmorpholine, N-ethyl morpholine and mixtures thereof. A preferred dimorpholinodialkyl ether is dimorpholinodiethyl ether. A preferred di((dialkylmorpholino)alkyl) ether is (di-(2-(3,5-dimethylmorpholino)ethyl)ether). Tertiary amines are preferably employed in an amount, based on the weight of the adhesive of about 0.01 parts by weight or greater, more preferably about 0.05 parts by weight or greater, even more preferably about 0.1 parts by weight or greater and most preferably about 0.2 parts by weight or greater and about 2.0 parts by weight or less, more preferably about 1.75 parts by weight or less, even more preferably about 1.0 parts by weight or less and most preferably about 0.4 parts by weight or less.

The compositions of this invention further comprise plasticizers so as to modify the rheological properties to a desired consistency. Such materials should be free of water, inert to isocyanate groups and compatible with a polymer. The compositions of the invention comprise two plasticizers. One is a high polar plasticizer and one is a low polar plasticizer. A high polar plasticizer is a plasticizer with a polarity greater than the polarity of the aromatic diesters, such as the phthalate esters. A low polar plasticizer is a plasticizer which has a polarity the same as or less than the aromatic diesters. Preferred high polar plasticizers include one or more of alkyl esters of sulfonic acid, alkyl alkylethers diesters, polyester resins, formals, polyglycol diesters, polymeric polyesters, tricarboxylic esters, dialkylether diesters, dialkylether aromatic esters, aromatic phosphate esters, and aromatic sulfonamides. More preferred high polar plasticizers include aromatic sulfonamides, aromatic phosphate esters, dialkyl ether aromatic esters and alkyl esters of sulfonic acid. Most preferred high polar plasticizers include alkyl esters of sulfonic acid and toluene-sulfamide. Alkyl esters of sulfonic acid include alkylsulphonic phenyl ester available from Lanxess under the trademark MESAMOLL. Aromatic phosphate esters include PHOSFLEX 31 L isopropylated triphenyl phosphate ester, DISFLAMOLL DPO diphenyl-2-ethyl hexyl phosphate, and DISFLAMOLL TKP tricresyl phosphate. Dialkylether aromatic esters include BENZOFLEX 2-45 diethylene glycol dibenzoate. Aromatic sulfonamides include KETJENFLEX 8 o and p, N-ethyl toluenesulfonamide. Preferable low polar plasticizers are well known in the art and include one or more aromatic diesters, aromatic triesters, aliphatic diesters, epoxidized esters, epoxidized oils, chlorinated hydrocarbons, aromatic oils, alkylether monoesters, naphthenic oils, alkyl monoesters, glyceride oils, parraffinic oils and silicone oils. Preferred low polar plasticizers include alkyl phthalates, such as diisononyl phthalates, dioctylphthalate and dibutylphthalate, partially hydrogenated terpene commercially available as "HB-40", epoxy plasticizers, chloroparaffins, adipic acid esters, castor oil, toluene and alkyl naphthalenes. The most preferred low polar plasticizers are the alkyl phthalates. The amount of low polar plasticizer in the adhesive composition is that amount which gives the desired rheological properties and which is sufficient to disperse the catalyst in the system. The amounts disclosed herein include those amounts added during preparation of the prepolymer and during compounding of the adhesive. Preferably, low polar plasticizers are used in the adhesive composition in an amount of about 5 parts by weight or greater based on the weight of the adhesive composition, more preferably about 10 parts by weight or greater, and most preferably about 18 parts by weight or greater. The low polar plasticizer is preferably used in an amount of about 40 parts by weight or less based on the total amount of the adhesive composition, more preferably about 30 parts by weight or less and most preferably about 25 parts by weight or less. The amount of high polar plasticizer in the adhesive composition is that amount which gives the desired rheological properties and the acceptable sag and string properties. Preferably, the high polar plasticizers are used in the adhesive composition in an amount of about 0.2 parts by weight or greater based on the weight of the adhesive composition, more preferably about 0.5 parts by weight or greater, and most preferably about 1 part by weight or greater. The high polar plasticizer is preferably used in an amount of about 20 parts by weight or less based on the total amount of the adhesive composition, more preferably about 12 parts by weight or less and most preferably about 8 parts by weight or less.

The adhesive of the invention may be formulated with fillers and additives known in the prior art for use in adhesive compositions. By the addition of such materials physical properties such as viscosity flow rates and the like can be modified. However, to prevent premature hydrolysis of the moisture sensitive groups of the polyurethane prepolymer, fillers should be thoroughly dried before admixture therewith.

Optional components of the adhesive of the invention include reinforcing fillers. Such fillers are well known to those skilled in the art and include carbon black, titanium dioxide, calcium carbonate, surface treated silicas, titanium oxide, fumed silica, talc, and the like. Preferred reinforcing fillers comprise carbon black as described hereinbefore. In one embodiment, more than one reinforcing filler may be used, of which one is carbon black. The reinforcing fillers are used in sufficient amount to increase the strength of the adhesive and to provide thixotropic properties to the adhesive.

Among optional materials in the adhesive composition are clays. Preferred clays useful in the invention include kaolin, surface treated kaolin, calcined kaolin, aluminum silicates and surface treated anhydrous aluminum silicates. The clays can be used in any form, which facilitates formulation of a pumpable adhesive. Preferably, the clay is in the form of pulverized powder, spray-dried beads or finely ground particles. Clays may be used in an amount of about 10 parts by weight of the adhesive composition or greater, more preferably about 12 part by weight or greater and even more preferably about 18 parts by weight or greater. Preferably, the clays are used in an amount of about 30 parts by weight or less of the adhesive composition, more preferably about 28 parts by weight or less and most preferably about 24 parts by weight or less.

The composition of this invention may further comprise stabilizers, which function to protect the adhesive composition from moisture, thereby inhibiting advancement and preventing premature crosslinking of the isocyanates in the adhesive formulation. Stabilizers known to the skilled artisan for moisture curing adhesives may be used preferably herein. Included among such stabilizers are diethylmalonate, alkylphenol alkylates, paratoluene sulfonic isocyanates, benzoyl chloride and orthoalkyl formates. Such stabilizers are preferably used in an amount of about 0.1 parts by weight or greater based on the total weight of the adhesive composition, preferably about 0.5 parts by weight or greater and more preferably about 0.8 parts by weight or greater. Such stabilizers are used in an amount of about 5.0 parts by weight or less based on the weight of the adhesive composition, more preferably about 2.0 parts by weight or less and most preferably about 1.4 parts by weight or less.

The composition of this invention may further comprise an adhesion promoter, such as those disclosed in Mahdi, U.S. Patent Publication 2002/0100550 paragraphs 0055 to 0065 and Hsieh, U.S. 6,015,475 column 5 line 27 to column 6, line 41. The amounts of such adhesion promoters useful are also disclosed in these references and incorporated herein by reference.

The composition may further comprise a hydrophilic material that functions to draw atmospheric moisture into the composition. This material enhances the cure speed of the formulation by drawing atmospheric moisture to the composition. Preferably, the hydrophilic material is a liquid. Among preferred hydroscopic materials are pyrolidinones such as 1 methyl-2-pyrolidinone, available from under the trademark M-Pyrol. The hydrophilic material is preferably present in an amount of about 0.1 parts by weight or greater and more preferably about 0.3 parts by weight or greater and preferably about 1.0 parts by weight or less and most preferably about 0.6 parts by weight or less. Optionally the adhesive composition may further comprise a thixotrope. Such thixotropes are well known to those skilled in the art and include alumina, limestone, talc, zinc oxides, sulfur oxides, calcium carbonate, perlite, slate flour, salt (NaCl), cyclodextrin and the like. The thixotrope may be added to the adhesive of composition in a sufficient amount to give the desired rheological properties. Preferably, the thixotrope is present in an amount of about 0 parts by weight or greater based on the weight of the adhesive composition, preferably about 1 part by weight or greater. Preferably, the optional thixotrope is present in an amount of about 10 parts by weight or less based on the weight of the adhesive composition and more preferably about 2 parts by weight or less.

Other components commonly used in adhesive compositions may be used in the composition of this invention. Such materials are well known to those skilled in the art and may include ultraviolet stabilizers and antioxidants and the like.

As used herein all parts by weight relative to the components of the adhesive composition are based on 100 total parts by weight of the adhesive composition.

The adhesive composition of this invention may be formulated by blending the components together using means well known in the art. Generally, the components are blended in a suitable mixer. Such blending is preferably conducted in an inert atmosphere in the absence of oxygen and atmospheric moisture to prevent premature reaction. In embodiments where a polyester based isocyanate functional prepolymer is used, the adhesive compositions are blended at a temperature above the melting point of the polyester based isocyanate functional prepolymer and below a temperature at which significant side reactions occur. In this embodiment, the temperatures utilized are from about 40°C to less than about 90°C, more preferably about 50°C to about 70°C. It may be advantageous to add any plasticizers to the reaction mixture for preparing the isocyanate containing prepolymer so that such mixture may be easily mixed and handled. Alternatively, the plasticizers can be added during blending of all the components. Once the adhesive composition is formulated, it is packaged in a suitable container such that it is protected from atmospheric moisture and oxygen. Contact with atmospheric moisture and oxygen could result in premature crosslinking of the polyurethane prepolymer-containing isocyanate groups.

The adhesive composition of the invention is used to bond a variety of substrates together as described hereinbefore. The composition can be used to bond porous and nonporous substrates together. The adhesive composition is applied to a substrate and the adhesive on the first substrate is thereafter contacted with a second substrate. In preferred embodiments, the surfaces to which the adhesive is applied are cleaned and primed prior to application, see for example, U.S. Patents 4,525,511; 3,707,521 and 3,779,794. Generally the adhesives of the invention are applied at ambient temperature in the presence of atmospheric moisture. Exposure to atmospheric moisture is sufficient to result in curing of the adhesive. Curing can be accelerated by the addition of additional water or by applying heat to the curing adhesive by means of convection heat, microwave heating and the like. Preferably, the adhesive of the invention is formulated to provide a working time of about 6 minutes or greater more preferably about 10 minutes or greater. Preferably, the working time is about 15 minutes or less and more preferably about 12 minutes or less.

The adhesive composition is preferably used to bond glass or plastic coated with an abrasion resistant coating, to other substrates such as metal or plastics. In a preferred embodiment the first substrate is a glass, or plastic coated with an abrasion resistant coating, window and the second substrate is a window frame. In another preferred embodiment the first substrate is a glass, or plastic coated with an abrasion resistant coating, window and the second substrate is a window frame of an automobile. Preferably, the glass window is cleaned and has a glass primer applied to the area to which the adhesive is to be bonded. The plastic coated with an abrasion resistant coating can be any plastic which is clear, such as polycarbonate, acrylics, hydrogenated polystyrene or hydrogenated styrene conjugated diene block copolymers having greater than 50 percent styrene content. The coating can comprise any coating which is abrasion resistant such as a polysiloxane coating. Preferably, the coating has an ultraviolet pigmented light blocking additive. Preferably, the glass or plastic window has an opaque coating disposed in the region to be contacted with the adhesive to block UV light from reaching the adhesive.

In a preferred embodiment the composition of the invention is used to replace windows in structures or vehicles and most preferably in vehicles. The first step is removal of the previous window. This can be achieved by cutting the bead of the adhesive holding the old window in place and then removing the old window. Thereafter the new window is cleaned and primed. The old adhesive that is located on the window flange can be removed, although it is not necessary and in most cases it is left in place. The window flange is preferably primed with a paint primer. The adhesive is applied in a bead to the periphery of the window located such that it will contact the window flange when placed in the vehicle. The window with the adhesive located thereon is then placed into the flange with the adhesive located between the window and the flange. The adhesive bead is a continuous bead that functions to seal the junction between the window and the window flange. A continuous bead of adhesive is a bead that is located such that the bead connects at each end to form a continuous seal between the window and the flange when contacted. Thereafter the adhesive is allowed to cure.

In another embodiment the compositions of the invention can be used to bond modular components together. Examples of modular components include vehicle modules, such as door, window or body.

Viscosities as described herein are determined according to the procedure disclosed in Bhat, U.S. Patent 5,922, 809 at column 12, lines 38 to 49, incorporated herein by reference. Molecular weights as described herein are determined according to the following to the procedure disclosed in Bhat, U.S. Patent 5,922,809 at column 12, lines 50 to 64, incorporated herein by reference. In reference to polyurethane prepolymers, average isocyanate functionality is determined according to the procedure disclosed in Bhat, U.S. Patent 5,922,809 at column 12 lines 65 to column 13, line 26, incorporated herein by reference.

### Illustrative Embodiments of the Invention

The following examples are provided to illustrate the invention, but are not intended to limit the scope thereof. All parts and percentages are by weight unless otherwise indicated.

### Preparation of Polyether Prepolymer 1

A polyether polyurethane prepolymer is prepared by mixing 270 g of a polyoxypropylene having an ethylene oxide end cap and a weight average molecular weight of 2000 with 164 g of a polyoxypropylene triol having a weight average molecular weight of 4500 and 125 g of a styrene acrylonitrile dispersed polyoxypropylene triol with a weight average molecular weight of 3500. Mixing is carried out in a reactor by heating the mixture to 48°C. 87g of dipheylmethane-4,4'-diisocyanate and 0.5 g stannous octoate are added to the mixture. The whole mixture is then reacted for 1 hour at about 65°C. 323 g of a diisononyl phthalate plasticizer is added to the mixture and the mixing is continued for about 0.5 hour. Thereafter, 6 g of gamma-glycidylpropyl trimethoxysilane and 14 g of a blend of a trisnonylphenyphosphite, 2-(2H-benzotriazole-2-yl)-6-dodecyl-4-methylphenol and bis(2,2,6,6,-pentamethyl-4-piperdinyl) sebacate in equal amounts, about 14 g are added to the mixture. The resulting prepolymer has an isocyante content of about 1 percent by weight, contains 32 percent of phthalate plasticizer and exhibits a viscosity of about 25,000 to 45,000 centipoise. The prepolymer exhibits an ethylene oxide content of 2.9 and a urea and urethane density of about 3.9.

### Preparation of Polyether Prepolymer 2

A polyether polyurethane prepolymer is prepared by mixing 203 g of a polyoxypropylene diol having a weight average molecular weight of 2,000 with 294 g of a polyoxypropylene triol having an ethylene oxide cap and weight average molecular weight of 4,500. Mixing is carried out in a reactor by heating the mixture to 48°C. 90 g of dipheylmethane-4,4'-diisocyanate and 0.5 g of stannous octoate are added to the mixture. The whole mixture is then reacted for 1 hour at 65°C. Finally, 405 g of a diisononyl phthalate plasticizer is added to the mixture and the mixing is continued for 1 hour. The resulting prepolymer has an isocyanate content of about 1.5 percent by weight, contains 40 percent of phthalate plasticizer and exhibits a viscosity of about 4,000 to about 9,000 centipoise. The prepolymer exhibits an ethylene oxide content of 0.9 and a urea and urethane density of 4.

### Preparation of Polyester Prepolymer 1

A polyester polyurethane prepolymer is prepared by charging 150 g of diphenylmethane-4,4'-diisocyanate (MDI) to a reaction vessel and heating to 48°C. Then 850 g of molten linear polyester diol (DYNACOLL™ 7360) is slowly added and allowed to react for thirty minutes with a maximum allowable temperature of 87°C. The resulting polyester prepolymer exhibits a melting point of 49°C.

### Compounding of Adhesives

All of the adhesives are made according to the following compounding procedure using the raw material percentages listed in Table 1 below. The only change between the different formulations is the compounding temperature. Adhesives without the polyester prepolymers are compounded at room temperature; otherwise, the mixing vessel is heated to 55°C for the polyester polyurethane prepolymers.

The mixing vessel is heated to the desired temp if the polyester polyurethane prepolymer is used. The appropriate amounts of polyether prepolymer and multifunctional isocyanate (DESMODUR™ N3300 or PAPI™ 2020) are charged to the vessel and degassed under vacuum for 15 minutes. The polyester polyurethane prepolymers are then added and the materials are degassed under vacuum for an additional 15 minutes. The carbon black and clay fillers are added and mixed for five minutes at slow speed under vacuum until the fillers are sufficiently wetted by the prepolymers. The mixing speed is increased and the fillers dispersed for 20 minutes. Finally, the dimorpholino diethyl ether and bismuth octoate catalysts and the N-methyl pyrolidone are added to the mixing vessel and the mixture is mixed under vacuum for an additional 10 minutes.

### Testing Procedures

Press Flow Viscosity: The press flow viscosity is determined as the time (seconds) required to extrude 20 grams of adhesive through a capillary. The width of the capillary is fixed at 0.203 in (5.1 mm) and the applied pressure is 80 psi (5.5 x 10⁵ Pa). Unless otherwise noted, all press flow viscosity values were determined at 23+/-1°C.

Stringing Test: The stringing test is conducted by dispensing the adhesive with a high speed battery powered caulking gun. After dispensing approximately six inches of an 8 mm by 12 mm isosceles triangle shaped bead the dispensing tip is immediate pulled away from the adhesive bead in a motion parallel to and in the same plane as the adhesive bead. The stringing is measured by the length of the tail, in mm, that is left upon separation.

### Results

Table 1 describes the formulations tested and the results. The tested adhesives can be dispensed at room temperature (typically demonstrating a press flow viscosity range of between 20 and 50 seconds for materials that will be applied with a caulking gun).

**Table 1**

| **Example** | **1** | **2** | **3** | **4** | **5** | **6** | **7** | **8** |
|---|---|---|---|---|---|---|---|---|
| Polyether prepolymer 1 | 59.89 | 37.69 | 34.69 | 34.69 | 34.69 | 59.89 | 57.19 | 54.19 |
| Polyether prepolymer 2 | 0 | 19 | 17 | 17 | 17 | 0 | 0 | 0 |
| PAPI™ 20 polyfunctional isocyanate | 1.4 | 1.4 | 1.4 | 1.4 | 1.4 | 1.4 | 1.4 | 1.4 |
| Diisononyl phthalate | 1.3 | 0 | 0 | 0 | 0 | 1.3 | 0 | 0 |
| Catalyst Mixture¹ | 0.91 | 0.91 | 0.91 | 0.91 | 0.91 | 0.91 | 0.91 | 0.91 |
| Polyester prepolymer | 1.5 | 1.5 | 1.5 | 1.5 | 1.5 | 0 | 0 | 0 |
| Iceburg Clay | 19 | 23.5 | 23.5 | 23.5 | 23.5 | 19 | 20 | 21 |
| Carbon Black² | 16 | 16 | 16 | 16 | 16 | 16 | 16 | 16 |
| Alkylsulphonic phenyl ester | 0 | 0 | 5 | 5 | 5 | 0 | 3 | 5 |
| Total | | | | | | | | |
| | 100 | 100 | 100 | 100 | 100 | 100 | 100 | 100 |
| | | | | | | | | |
| **Initial Press Flow (sec)** | 25 | 46 | 27 | 22 | 21 | 26 | 33 | 32 |
| | 24 | 48 | 27 | 21 | 21 | 26 | 33 | 31 |
| **After 3 days at 54C HA(sec)** | 30 | 48 | 34 | 28 | 32 | 29 | 34 | 37 |
| | 30 | 50 | 32 | 29 | 30 | 28 | 34 | 36 |
| After 3 days at 70C HA **(sec)** | 40 | 70 | 32 | 39 | 36 | 40 | 47 | 60 |
| | 41 | 70 | 32 | 40 | 34 | 41 | 49 | 59 |
| Initial Sag (mm) | 0 | 0 | 0 | 0 | 0 | 0 | 0 | 0 |
| **After 3 days at 54C HA** (mm) | 0 | 0 | 0 | 0 | 0 | >10 | 3 | 4 |
| **After 3 days at 70C HA** (mm) | 0 | 0 | 0 | 0 | 0 | >20 | >20 | >20 |
| Initial Stringiness (mm) | 23.1 | 19.6 | 7 | 8.8 | 11.5 | 68 | 15.6 | 35.8 |
| **After 3 days at 54C HA** (mm) | 12.1 | 13.6 | 5 | 7 | 5 | 86.6 | 75 | 44.9 |
| **After 3 days at 70C HA** (mm) | 27.5 | 7.8 | 3.4 | 4.2 | 9 | 40.5 | 39 | 21 |

| | | | | | | | | |
|---|---|---|---|---|---|---|---|---|
| 1. Catalyst mixture comprises 59 percent by weight of dimorpholino diethyl ether and 41 percent and bismuth octoate. 2. Carbon black having an Oil Absorption Number of 102 to 110 and an Iodine number of 82.0 to 90.0. | | | | | | | | |

Both prepolymers contain phthalate ester plasticizer.

This data illustrates the improvement in the stringing of the adhesive through the addition of the lower polarity prepolymer and the polar, low molecular weight compound.

### Preparation of Prepolymer 3

Prepolymer 3 is prepared in the same manner as Prepolymer 2 is prepared except the triol used is polypropylene oxide with no ethylene oxide cap having a molecular weight of 5000 and having a hydroxyl number of 33. The resulting prepolymer has a urethane density of 3.2 percent by weight and 0 percent ethylene oxide.

Yield Stress is the amount of stress to be applied to a material before any flow is induced. Yield Stress Test is performed as described. A stepped flow test is performed using TA Instruments AR-2000 rheometer. Bingham model is used to calculate yield stress. High yield stress indicates good sag resistant.

| | |
|---|---|
| Geometry: | 40 mm parallel plate, 1000 micron gap |
| Pre-shear for sample: | 60 seconds at 10 s⁻¹ |
| Recover time: | 60 seconds |
| Shear Stress: | 100 - 2000 Pa |
| Temperature: | 25°C |

Storage modulus is the ratio of the shear stress to the corresponding deformation. The G' value is a measure of the deformation energy stored in the sample during the shear process. It represents the rigidity a sample, i.e. the resistance to deformation. The high G' value indicates good sag resistant. The Storage Modulus (G') Test is a controlled shear stress amplitude sweep using TA Instruments AR-2000 rheometer.

| | |
|---|---|
| Geometry: | 25 mm parallel plate, 1000 micron gap |
| Pre-shear for sample: | 60 seconds at 10 s⁻¹ |
| Recover time: | 60 seconds |
| Shear Stress: | 1 - 500 Pa |
| Oscillatory frequency: | 1 Hz |
| Temperature: | 25°C |

Several adhesive compostions are prepared as described above and tested as described herein. The formulations and results are compiled in Table 2.

| | | | | | | | | | |
|---|---|---|---|---|---|---|---|---|---|
| Ingredients\Examples | 9 | 10 | 11 | 12 | 13 | 14 | 15 | 16 | 17 |
| Prepolymer 1 | | | | | | | | 31 | |
| Prepolymer 2 | 47 | 47 | 47 | 47 | 47 | 47 | 47 | | 30.05 |
| Prepolymer 3 | | | | | | | | 13 | 13 |
| PAPI™ 20 polyfunctional isocyanate | | | | | | | | 2 | 2 |
| Diisononyl phthalate | 38 | 34 | 30 | 30 | 30 | 28.5 | 31.5 | | |
| Catalyst Mixture | | | | | | | | 0.65 | 0.65 |
| Carbon Black | 15 | 15 | 15 | 15 | 15 | 15 | 15 | 16 | 16 |
| Calcium Carbonate | | | | | | | | 15 | 15.50 |
| Iceburg clay | | | | | | | | | |
| Alkylsulphonic phenyl ester | | | 8 | | | | | 7.35 | 7.30 |
| o and p N-ethyl toluenesulfonamide | | 4 | | | | | | | |
| Diphenyl-2-ethylhexyl phosphate | | | | 8 | | | | | |
| Tricresyl phosphate | | | | | 8 | | | | |
| Isopropylated triphenyl phosphate ester | | | | | | 9.5 | | | |
| Diethylene glycol dibenzoate | | | | | | | 6.5 | | |
| TESTING | | | | | | | | | |
| Bingham yield stress (Pa) | 649 | 659 | 724 | 676 | 717 | 688 | 752 | | |
| G' at 25 Pa stress (Pa E+04) | 4.08 | 4.22 | 4.49 | 4.26 | 4.44 | 3.92 | 5.36 | | |
| Initial Press Flow (sec) | | | | | | | | 26 | 21 |
| Press flow after 3 days at 54°C (sec) | | | | | | | | 28 | 22 |
| Press flow after 7 days at 54°C (sec) | | | | | | | | 31 | 21 |
| Initial Stringiness (mm) | | | | | | | | 17 | 8 |
| Stringiness after 3 days at 54°C (mm) | | | | | | | | 17 | 16 |
| Stringiness after 7 days at 54°C (mm) | | | | | | | | 34 | 21 |
| G' @ 100Pa stress (Pa E+06) initial | | | | | | | | 3.36 | 3.19 |
| G' @ 100Pa stress (Pa E+06) after 3 Days at 54°C | | | | | | | | 1.25 | 2.87 |
| G' @ 100Pa stress (Pa E+06) after 7 Days at 54°C | | | | | | | | 6.08* | 2.19 |
| Sag initial | | | | | | | | 0 | 0 |
| Sag after 3 days at 54°C | | | | | | | | 0 | 0 |
| Sag after 7 days at 54°C | | | | | | | | >10 | 0 |

| | | | | | | | | | |
|---|---|---|---|---|---|---|---|---|---|
| * Pa E+04 | | | | | | | | | |

## Claims

1. An adhesive composition comprising: a) 20 to 60 parts by weight of one or more isocyanate functional polyether based prepolymers; b) 5 to 40 parts by weight of one or more plasticizers having a polarity the same as or less than the aromatic diesters; c) 0.2 to 20 parts by weight of one or more plasticizers having a polarity greater than the polarity of the aromatic diesters; d) 10 to 35 parts by weight of one or more carbon blacks; e) 0.005 to 2 parts by weight of one or more catalysts for the reaction of isocyanate moieties with hydroxyl groups; and f) 1 to 10 parts by weight of one or more isocyanate functional polyester based prepolymers which are solid at 23°C, wherein the total parts by weight of the composition is 100 parts.

2. An adhesive composition according to Claim 1 wherein the one or more isocyanate functional polyether based prepolymers contain less than about 8.5 percent by weight of urea and/or urethane and/or related units.

3. An adhesive composition according to Claims 1 or 2 wherein the one or more isocyanate functional polyether based prepolymers contains less than about 3 percent by weight of ethylene oxide units in the backbone of the prepolymer.

4. An adhesive composition according to Claims 1 to 3 wherein the high polar plasticizers comprise one or more alkyl esters of sulfonic acid, alkyl alkylethers diesters, polyester resins, formals, polyglycol diesters, polymeric polyesters, tricarboxylic esters, dialkylether diesters, dialkylether aromatic esters, aromatic phosphate esters, or aromatic sulfonamides.

5. An adhesive composition according to Claims 1 to 4 wherein the low polar plasticizers comprise one or more aromatic diesters, aromatic triesters, aliphatic diesters, epoxidized esters, epoxidized oils, chlorinated hydrocarbons, aromatic oils, alkylether monoesters, naphthenic oils, alkyl monoesters, glyceride oils, parraffinic oils or silicone oils.

6. An adhesive composition according to Claims 1 to 5 wherein the one or more high polar plasticizer is one or more alkyl esters of sulfonic acid.

7. An adhesive composition according to Claims 1 to 6 wherein the one or more low polar plasticizers is one or more aromatic diesters.

8. An adhesive composition according to Claims 1 to 7 wherein the one or more conductive carbon blacks is present in an amount of about 20 parts by weight or less.

9. An adhesive composition according to any one of Claims 1 to 7 wherein the one or more conductive carbon blacks is present in an amount such that the composition has a dielectric constant of about 15 or less.

10. An adhesive composition according to any one of Claims 1 to 9 wherein the composition further comprises one or more polyisocyanates having a nominal functionality of about 3 or greater.

11. An adhesive composition according to Claim 10 wherein the polyfunctional polyisocyanate is an oligomer or polymer based on hexamethylene diisocyanate or methylene diphenyl diisocyanate.

12. A method of bonding two or more substrates together which comprises contacting the two or more substrates together with an adhesive composition according to any one of Claims 1 to 14 disposed along at least a portion of the area wherein the substrates are in contact.

13. The method of Claim 12 wherein the at least one of the substrates is window glass.

14. A method according to Claims 12 or 13 wherein at least one of the other substrates is a building or a vehicle.

15. A method of replacing a window of a vehicle comprising: i) removing the window from the vehicle; ii) applying an adhesive composition according to any one of Claims 1 to 11 to a replacement window or to the flange of the vehicle adapted to hold the window into the vehicle; iii) contacting the flange of the vehicle and the replacement window with the composition disposed between the replacement window and the flange of the vehicle; and iv) allowing the adhesive to cure.

## Patentansprüche

1. Eine Klebstoffzusammensetzung, beinhaltend: a) zu 20 bis 60 Gewichtsteilen ein oder mehrere isocyanatfunktionelle Vorpolymere auf Polyetherbasis; b) zu 5 bis 40 Gewichtsteilen einen oder mehrere Weichmacher mit einer Polarität gleich oder geringer als die aromatischen Diester; c) zu 0,2 bis 20 Gewichtsteilen einen oder mehrere Weichmacher mit einer Polarität, die höher als die Polarität der aromatischen Diester ist; d) zu 10 bis 35 Gewichtsteilen einen oder mehrere Ruße; e) zu 0,005 bis 2 Gewichtsteilen einen oder mehrere Katalysatoren für die Reaktion von Isocyanatanteilen mit Hydroxylgruppen; und f) zu 1 bis 10 Gewichtsteilen ein oder mehrere isocyanatfunktionelle Vorpolymere auf Polyesterbasis, die bei 23 °C fest sind, wobei die Gesamtgewichtsteile der Zusammensetzung 100 Teile betragen.

2. Klebstoffzusammensetzung gemäß Anspruch 1, wobei das eine oder die mehreren isocyanatfunktionellen Vorpolymere auf Polyetherbasis zu weniger als etwa 8,5 Gewichtsprozent Harnstoff und/oder Urethan und/oder verwandte Einheiten enthalten.

3. Klebstoffzusammensetzung gemäß den Ansprüchen 1 oder 2, wobei das eine oder die mehreren isocyanatfunktionellen Vorpolymere auf Polyetherbasis zu weniger als etwa 3 Gewichtsprozent Ethylenoxideinheiten in der Hauptkette des Vorpolymers enthalten.

4. Klebstoffzusammensetzung gemäß den Ansprüchen 1 bis 3, wobei die stark polaren Weichmacher einen oder mehrere Sulfonsäurealkylester, Alkylalkyletherdiester, Polyesterharze, Formale, Polyglykoldiester, polymere Polyester, Tricarbonsäureester, Dialkyletherdiester, aromatische Dialkyletherester, aromatische Phosphatester oder aromatische Sulfonamide beinhalten.

5. Klebstoffzusammensetzung gemäß den Ansprüchen 1 bis 4, wobei die gering polaren Weichmacher einen oder mehrere aromatische Diester, aromatische Triester, aliphatische Diester, epoxidierte Ester, epoxidierte Öle, chlorierte Kohlenwasserstoffe, aromatische Öle, Alkylethermonoester, naphthenische Öle, Alkylmonoester, Glyceridöle, paraffinische Öle oder Siliconöle beinhalten.

6. Klebstoffzusammensetzung gemäß den Ansprüchen 1 bis 5, wobei der eine oder die mehreren stark polaren Weichmacher ein oder mehrere Sulfonsäurealkylester sind.

7. Klebstoffzusammensetzung gemäß den Ansprüchen 1 bis 6, wobei der eine oder die mehreren gering polaren Weichmacher ein oder mehrere aromatische Diester sind.

8. Klebstoffzusammensetzung gemäß den Ansprüchen 1 bis 7, wobei der eine oder die mehreren leitenden Ruße in einer Menge von etwa 20 Gewichtsteilen oder weniger vorhanden sind.

9. Klebstoffzusammensetzung gemäß einem der Ansprüche 1 bis 7, wobei der eine oder die mehreren leitenden Ruße in einer Menge vorhanden sind, sodass die Zusammensetzung eine dielektrische Konstante von etwa 15 oder weniger aufweist.

10. Klebstoffzusammensetzung gemäß einem der Ansprüche 1 bis 9, wobei die Zusammensetzung ferner ein oder mehrere Polyisocyanate mit einer nominellen Funktionalität von etwa 3 oder mehr beinhaltet.

11. Klebstoffzusammensetzung gemäß Anspruch 10, wobei das polyfunktionelle Polyisocyanat ein Oligomer oder Polymer auf Hexamethylendiisocyanat- oder Methylendiphenyldiisocyanatbasis ist.

12. Ein Verfahren zum Aneinanderbinden von zwei oder mehreren Substraten, das das In-Kontakt-Bringen der zwei oder mehreren Substrate mit einer Klebstoffzusammensetzung gemäß einem der Ansprüche 1 bis 14, angeordnet entlang mindestens einem Teil des Bereichs, in dem die Substrate miteinander in Kontakt sind, beinhaltet.

13. Verfahren gemäß Anspruch 12, wobei das mindestens eine der Substrate Fensterglas ist.

14. Verfahren gemäß den Ansprüchen 12 oder 13, wobei mindestens eines der anderen Substrate ein Gebäude oder ein Fahrzeug ist.

15. Ein Verfahren zum Ersetzen eines Fensters eines Fahrzeugs, beinhaltend: i) Entfernen des Fenster von dem Fahrzeug; ii) Aufbringen einer Klebstoffzusammensetzung gemäß einem der Ansprüche 1 bis 11 auf ein Ersatzfenster oder auf den Flansch des Fahrzeugs, der angepasst ist, um das Fenster in dem Fahrzeug zu halten; iii) In-Kontakt-Bringen des Flansches des Fahrzeugs und des Ersatzfensters mit der zwischen dem Ersatzfenster und dem Flansch des Fahrzeugs angeordneten Zusammensetzung; und iv) Aushärtenlassen des Klebstoffs.

## Revendications

1. Une composition adhésive comprenant : a) 20 à 60 parties en poids d'un ou de plusieurs prépolymères à base de polyéther à fonctionnalité isocyanate ; b) 5 à 40 parties en poids d'un ou de plusieurs plastifiants ayant une polarité identique ou inférieure aux diesters aromatiques ; c) 0,2 à 20 parties en poids d'un ou de plusieurs plastifiants ayant une polarité supérieure à la polarité des diesters aromatiques ; d) 10 à 35 parties en poids d'un ou de plusieurs noirs de carbone ; e) 0,005 à 2 parties en poids d'un ou de plusieurs catalyseurs pour la réaction de groupements isocyanate avec des groupes hydroxy ; et f) 1 à 10 parties en poids d'un ou de plusieurs prépolymères à base de polyester à fonctionnalité isocyanate qui sont solides à 23 °C, les parties totales en poids de la composition représentant 100 parties.

2. Une composition adhésive selon la revendication 1 dans laquelle le ou les prépolymères à base de polyéther à fonctionnalité isocyanate contiennent moins d'approximativement 8,5 pour cent en poids d'urée et/ou d'uréthane et/ou d'unités apparentées.

3. Une composition adhésive selon les revendications 1 ou 2 dans laquelle le ou les prépolymères à base de polyéther à fonctionnalité isocyanate contiennent moins d'approximativement 3 pour cent en poids d'unités d'oxyde d'éthylène dans le squelette du prépolymère.

4. Une composition adhésive selon les revendications 1 à 3 dans laquelle les plastifiants à haute polarité comprennent un ou plusieurs esters alkyliques d'acide sulfonique, diesters alkyléther alkyles, résines polyester, formals, diesters polyglycol, polyesters polymériques, esters tricarboxyliques, diesters de dialkyléther, esters aromatiques de dialkyléther, esters phosphates aromatiques ou sulfonamides aromatiques.

5. Une composition adhésive selon les revendications 1 à 4 dans laquelle les plastifiants à basse polarité comprennent un ou plusieurs diesters aromatiques, triesters aromatiques, diesters aliphatiques, esters époxydés, huiles époxydées, hydrocarbures chlorés, huiles aromatiques, monoesters d'alkyléther, huiles naphténiques, monoesters d'alkyles, huiles de glycéride, huiles paraffiniques ou huiles de silicone.

6. Une composition adhésive selon les revendications 1 à 5 dans laquelle le ou les plastifiants à haute polarité sont un ou plusieurs esters alkyliques d'acide sulfonique.

7. Une composition adhésive selon les revendications 1 à 6 dans laquelle le ou les plastifiants à basse polarité sont un ou plusieurs diesters aromatiques.

8. Une composition adhésive selon les revendications 1 à 7 dans laquelle le ou les noirs de carbone conducteurs sont présents en une quantité d'approximativement 20 parties en poids ou moins.

9. Une composition adhésive selon n'importe laquelle des revendications 1 à 7 dans laquelle le ou les noirs de carbone conducteurs sont présents en une quantité telle que la composition présente une constante diélectrique d'approximativement 15 ou de moins.

10. Une composition adhésive selon n'importe laquelle des revendications 1 à 9, la composition comprenant en outre un ou plusieurs polyisocyanates ayant une fonctionnalité nominale d'approximativement 3 ou de plus.

11. Une composition adhésive selon la revendication 10 dans laquelle le polyisocyanate polyfonctionnel est un oligomère ou un polymère à base d'hexaméthylène diisocyanate ou de méthylène diphényle diisocyanate.

12. Une méthode de liaison de deux substrats ou plus qui comprend le fait de mettre en contact les deux substrats ou plus avec une composition adhésive selon n'importe laquelle des revendications 1 à 14 disposée le long d'au moins une partie de la zone dans laquelle les substrats sont en contact.

13. La méthode de la revendication 12 dans laquelle l'au moins un des substrats est du verre à vitre.

14. Une méthode selon les revendications 12 ou 13 dans laquelle au moins l'un des autres substrats est un bâtiment ou un véhicule.

15. Une méthode de remplacement d'une fenêtre d'un véhicule comprenant : i) le fait de retirer la fenêtre du véhicule ; ii) le fait d'appliquer une composition adhésive selon n'importe laquelle des revendications 1 à 11 sur une fenêtre de remplacement ou sur la bride du véhicule conçue pour tenir la fenêtre dans le véhicule ; iii) le fait de mettre en contact la bride du véhicule et la fenêtre de remplacement avec la composition disposée entre la fenêtre de remplacement et la bride du véhicule ; et iv) le fait de laisser l'adhésif durcir.
